# EUROPEAN PATENT APPLICATION

(11) **EP 0 603 995 A1**
(43) Date of publication of application: **29.06.1994**
(21) Application number: 93306785.2
(22) Date of filing: 26.08.1993
(51) Int. Cl.: B01J 3/06

(54) **Process for the synthesising diamond single crystals**

(30) Priority: 22.12.1992 JP 341939/92; 22.12.1992 JP 341940/92; 22.12.1992 JP 341941/92; 22.01.1993 JP 9058/93
(71) Applicant: SUMITOMO ELECTRIC INDUSTRIES, LIMITED, Osaka 541 (JP)
(72) Inventor: Sumiya, Hitoshi, c/o Itami Works of Sumitomo, Itami-shi, Hyogo (JP); Satoh, Shuichi, c/o Itami Works of Sumitomo, Itami-shi, Hyogo (JP)
(74) Representative: Allard, Susan Joyce

(57) **Abstract**

Colorless and transparent, substantially inclusion-free diamond crystals can be synthesized in an economical and stable manner, for use as ornamental articles or in optical parts, by a process for the synthesis of diamond single crystal by a temperature gradient method, which comprises adding at least one element selected from Ti, Zr, Hf, V, Nb or Ta as a nitrogen getter and a material capable of decomposing at least one carbide of Ti, Zr, Hf, V, Nb or Ta to a solvent metal, or a process for the synthesis of diamond single crystal by a temperature gradient method, which comprises adding an alloy or intermetallic compound of the X-Y type (X is selected from Ti, Zr, Hf, V, Nb or Ta and Y is selected from Cu, Ag, Au, Zn or Cd), or a process for the synthesis of diamond single crystal by a temperature gradient method, which comprises adding at least one element selected from Ti, Zr, Hf, V, Nb or Ta as a nitrogen getter and starting the synthesis of diamond under such a state that a metallic plate to prevent formation of carbides on or near the seed surface is arranged between the solvent metal and the seed crystals.

## Description

This invention relates to a process for the synthesis of transparent diamond single crystals suitable for use as a material for ornamentation and optical parts.

At the present time, commercially available diamonds for ornamental use are colorless and tranparent diamonds with little internal defects which are selected from those mined in South Africa or Russia. Natural ornamental diamond is the jewel sold in the largest amounts. Optical parts using diamonds, are IR anvil cells, laser window materials, etc. Transparent diamonds having no absorption of light in the infrared range, called type IIa diamond, are selected from natural gem quality diamond and used for this purpose. However, the amount of colorless and transparent gem stones mined is very small, thus resulting in problems of stability of supply and price.

On the other hand, artificial synthetic diamonds are usually yellow in color because during synthesis at ultra-high pressures and high temperatures, nitrogen in a solvent is taken into the crystal lattice. Colorless and transparent diamond can be obtained by adding a nitrogen getter to the solvent. Al is well known as a nitrogen getter as disclosed in, for example, "The Journal of Physical Chemistry", Vol. 75, No. 12 (1971), p 1838. Specifically, US Patent No. 4034306 discloses that colorless and transparent diamond single crystals of gem grade can be obtained by adding 3 to 5 % by weight of Al to an Fe solvent.

As an example of nitrogen getters other than Al, it has been reported in "Muki-zaishitsu Kenkyujo Hokoku (Report of National Institute for Research in Inorganic Materials)", No. 39 (1984), page 16-19 that nitrogen in the crystal is removed by adding Ti or Zr to a solvent metal.

In particular, synthetic colorless and transparent diamonds have not been produced on a commercial scale, because of the higher synthesis costs thereof than that of natural ornamental diamond. The reason therefor is that not only is an expensive and special apparatus required for the synthesis of such diamond, but also in order to obtain good quality crystals, the growth rate has to be slow, since in the case of adding a nitrogen getter such as Al to a solvent, the solvent is taken into or included in the crystals (this phenomenon will hereinafter be referred to as "inclusion") with the increase in the amount of the nitrogen getter added, thus resulting in an inferior crystal. When using Ti or Zr as the nitrogen getter, in particular, carbides such as TiC or ZrC, formed in the solvent during synthesis of the diamond crystals, are taken into the diamond crystals and accordingly, it is difficult to obtain complete diamond crystals.

When using Al as a nitrogen getter and uniformly dissolving it in the solvent metal, it is found necessary in order to synthesize colorless and transparent diamond, according to the inventors' experimental results, to add the nitrogen getter in a proportion of at least 4 % by weight (about 12 % by volume) to the solvent and in this case, the growth rate should be less than 1 mg/hr so as to effect the crystal growth without inclusion thereof. At this growth rate, however, a synthesis time of 200 hours or more is required, for example, for obtaining a crystal of 1 carat (200 mg), resulting in large production costs.

When adding another nitrogen getter such as Ti or Zr having a larger reactivity with nitrogen than Al uniformly to the solvent, a colorless and transparent crystal can be obtained even in an added amount of 1 % by weight, but large amounts of carbides such as TiC or ZrC are included in the crystal even if the growth rate is slow and good quality crystals can scarcely be obtained. That is, a carbide such as TiC or ZrC itself is included in the diamond crystals, or such a carbide hinders the diffusion of carbon in the solvent and the amount of carbon fed to the surface of the crystal decreases, so that the solvent tends to be included in the diamond crystals.

We have now developed a process for the synthesis of diamond, which is colorless and transparent and substantially free from inclusions, in an economical and stable manner, whereby the above described problems of the prior art can be solved and the use of the artificial synthetic diamond for ornamental and optical appliances is rendered possible; a process for synthesizing diamond crystals of type IIa, substantially free from impurities, at a static high pressure without lowering the growth rate; and a process for the production of good quality diamond single crystals which are colorless and transparent, and free from inclusions.

Accordingly, the present invention provides a process for the synthesis of diamond single crystals by a temperature gradient method, which comprises adding at least one element selected from Ti, Zr, Hf, V, Nb or Ta as a nitrogen getter and a material capable of decomposing at least one of the carbides of Ti, Zr, Hf, V, Nb or Ta to a solvent metal or a process for the synthesis of diamond single crystals by a temperature gradient method, which comprises adding an alloy or intermetallic compound of the X-Y type (where X is Ti, Zr, Hf, V, Nb or Ta and Y is Cu, Ag, Au, Zn or Cd), or a process for the synthesis of diamond single crystals by a temperature gradient method, which comprises adding at least one of Ti, Zr, Hf, V, Nb or Ta as a nitrogen getter and commencing the synthesis of diamond under conditions such that a metallic plate is arranged between the solvent metal and seed crystals.

The accompanying drawings are to illustrate the principle and merits of the present invention in detail.

Figure 1 is a schematic view of the structure of a sample chamber for the synthesis of a diamond crystal as one embodiment of the present invention.

Figure 2 is a schematic view of the structure of a sample chamber for the synthesis of a diamond crystal as another embodiment of the present invention.

We have found that high quality diamond crystals of type IIa, substantially free from nitrogen impurities or inclusions, can be obtained at a relatively high growth rate by adding an element having a high reactivity with nitrogen, such as Ti, Zr, Hf, V, Nb or Ta, as a nitrogen getter to a solvent to increase the removal efficiency of nitrogen and simultaneously adding Cu, Ag, Au, Zn or Cd to reduce the formation of carbides such as TiC and ZrC in the solvent during synthesis, whereby the inclusion of the carbides and inclusion of the solvent in the diamond crystals can largely be decreased.

We have also found that the addition of an alloy or intermetallic compound consisting of an element of Ti, Zr, Hf, V, Nb or Ta and an element of Cu, Ag, Au, Zn or Cd as nitrogen getter to a solvent is more effective.

For diamond crystals grown by adding Ti or Zr as a nitrogen getter to a solvent most of the inclusions are continuously taken into the crystal from the surface of the seed crystal. Moreover, a further detailed examination indicates that carbides such as TiC and ZrC formed on the surface of the seed crystal at the initial stage of growth form the starting points of inclusions. It is assumed that Ti or Zr added to the solvent directly contacts the surface of the diamond seed crystals in some areas, at the part where synthesis of diamond starts and simultaneously Ti or Zr reacts with the diamond seed crystals to form TiC or ZrC on the surface of tlle seed crystals.

Thus, when a plate of a metal (1) forming no carbide by itself and having a low viscosity, e.g. Al, Ga, In, Tl, Sn, Pb, etc., (2) forming no carbide by itself and functioning to decompose carbides of Group IVa and Va elements of the Periodic Table, e.g. TiC, ZrC, NbC, etc. or (3) not forming carbides readily and becoming a solvent for the synthesis of diamond, e.g. Fe, Co, Ni, etc. is arranged between a solvent and seed crystal so as to prevent the direct contact of the solvent and seed crystal and prevent the formation and taking-in of the carbides on the seed crystal surface at the initial stage of growth, the carbides are hardly formed or taken into the seed crystal surface and the growth of diamond is maintained stable at the initial growth stage. The reason therefor is, for example, in the above described case (1), that Ti or Zr in the solvent does not directly contact the seed crystals, so that the carbides such as TiC or ZrC are not formed on the seed crystal surface, and the carbides such as TiC or ZrC formed in the vicinity of the seed crystal during the initial period of growth diffuse upwards in the solvent above the low viscosity material such as Al, Ga, In, Tl, Sn, Pb, etc. previously arranged over the seed crystals.

Consequently, inclusions starting from the carbide and inclusion due to unstable growth of diamond at the initial stage of growth can be prevented, whereby good type IIa diamond crystal can be obtained at a faster growth rate, e.g. at least two times of that of the prior art.

Thus, the first invention provides a process for the synthesis of diamond single crystals by a temperature gradient method, which comprises adding at least one element selected from Ti, Zr, Hf, V, Nb or Ta as a nitrogen getter and a material capable of decomposing at least one of the carbides of Ti, Zr, Hf, V, Nb or Ta to a solvent metal.

The material capable of decomposing at least one of the carbides of Ti, Zr, Hf, V, Nb or Ta is preferably a metal selected from Cu, Ag, Au, Zn and Cd.

The amount of the element selected from Ti, Zr, Hf, V, Nb or Ta to be added as a nitrogen getter is preferably in the range of from 0.1 to 5 % by weight based on the solvent and the amount of the material capable of decomposing at least one of the carbides of the Ti, Zr, Hf, V, Nb or Ta to be added is preferably in the range of from 0.1 to 20 % by weight based on the solvent.

The second invention provides a process for the synthesis of diamond single crystal by a temperature gradient method, which comprises adding an alloy or intermetallic compound of the X-Y type where X is Ti, Zr, Hf, V, Nb or Ta and Y is Cu, Ag, Au, Zn or Cd.

The amount of the alloy or intermetallic compound of the X-Y type to be added is preferably 0.1 to 10 % by weight based on the solvent.

In the present invention, the solvent metal is generally at least one metal selected from Fe, Co, Ni, Mn or Cr and preferably contains 0.1 to 6.0 % by weight of carbon.

The third invention provides a process for the synthesis of diamond single crystal by a temperature gradient method, which comprises adding at least one element selected from Ti, Zr, Hf, V, Nb or Ta as a nitrogen getter and commencing the synthesis of diamond under such a state that a metallic plate consisting of at least one element selected from the group consisting of Al, Ga, In, Tl, Sn and Pb is arranged between the solvent metal and the seed crystals.

The thickness of the metallic plate arranged between the solvent metal and the seed crystals is preferably from 0.01 to 0.3 mm.

The content of at least one element selected from Ti, Zr, Hf, V, Nb or Ta to be used as the nitrogen getter is preferably from 0.2 to 10 % by weight based on the solvent. The metals used as nitrogen getters can be added in the form of alloys with other metals such as Al, Cu, Si, Sn, etc.

The fourth invention provides a process for the synthesis of diamond single crystal by a temperature gradient method, which comprises adding at least one element selected from Ti, Zr, Hf, V, Nb or Ta as a nitrogen getter and starting the synthesis of diamond under such a state that a metallic plate consisting of at least one element selected from the group consisting of Cu, Ag, Au, Zn and Cd is arranged between the solvent metal and seed crystals.

The thickness of the metallic plate arranged between the solvent metal and the seed crystals is preferably from 0.01 to 1 mm.

The content of at least one element selected from the group consisting of Ti, Zr, Hf, V, Nb or Ta to be used as the nitrogen getter is preferably from 0.2 to 10 % by weight based on the solvent. The metals used as a nitrogen getter can be added in the form of alloys with other metals such as Al, Cu, Si, Sn, etc.

The fifth invention provides a process for the synthesis of diamond single crystal by a temperature gradient method, which comprises adding at least one element selected from Ti, Zr, Hf, V, Nb or Ta as a nitrogen getter and starting the synthesis of diamond under such a state that a metallic plate consisting of at least one element selected from Fe, Co, Ni and Mn is arranged between the solvent metal and seed crystals.

The thickness of the metallic plate arranged between the solvent metal and the seed crystal is preferably from 0.01 to 0.5 mm.

The content of at least one element selected from Ti, Zr, Hf, V, Nb or Ta to be used as a nitrogen getter is preferably from 0.2 to 10 % by weight based on the solvent. These metals as a nitrogen getter can be added in the form of alloys with other metals such as Al, Cu, Si, Sn, etc.

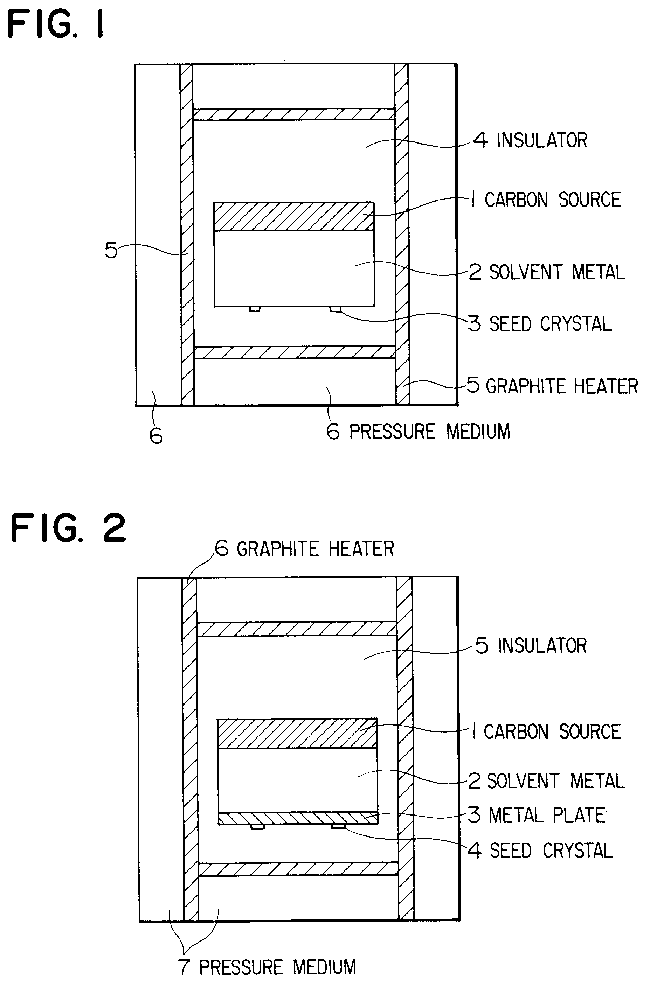

Figure 1 is a schematic view of the structure of a sample chamber for the synthesis of diamond crystal as one embodiment of the present invention, in which at least one element selected from Ti, Zr, Hf, V, Nb or Ta as a nitrogen getter is added to a solvent metal 2 and a metal selected from Cu, Ag, Au, Zn and Cd as a material capable of decomposing at least one of the carbides of Ti, Zr, Hf, V, Nb or Ta is simultaneously added thereto. The amount of at least one element selected from the group consisting of Ti, Zr, Hf, V, Nb or Ta to be added as a nitrogen getter is preferably 0.1 to 5 % by weight based on the solvent, since if it is less than 0.1 % by weight, the nitrogen is not sufficiently removed and the crystal becomes yellowish, while if it is more than 5 % by weight, the inclusions increase too much in the crystal to obtain a good crystal and the amount of the material capable of decomposing at least one of the carbides of Ti, Zr, Hf, V, Nb or Ta to be added is preferably from 0.1 to 20 % by weight based on the solvent, since if it is less than 0.1 % by weight, the effect of decomposing the carbides is not sufficient, while if it is more than 20 % by weight, polycrystallization, spontaneous nucleation and increase of inclusions take place, thus not resulting in good crystals.

In the second invention, an alloy or intermetallic compound of the X-Y type where X is Ti, Zr, Hf, V, Nb or Ta and Y is Cu, Ag, Au, Zn or Cd is added to the above described solvent metal 2. Examples of the Ti-Cu alloys are 25Ti - 75Cu alloy (weight ratio, same hereinafter), 50Ti - 50Cu and 75Ti - 25Cu alloys. Example of the Ti-Cu intermetallic compounds are Cu₂Ti (atomic ratio, same hereinafter), CuTi, CuTi₂, and Cu₃Ti₂ and the like, and as examples of the Cu-Zr intermetallic compound are Cu₃Zr, Cu₃Zr₂, CuZr and CuZr₂. The amount of the alloy or intermetallic compound of the X-Y type is preferably from 0.1 to 10 % by weight based on the solvent, since if it is less than 0.1 % by weight, nitrogen is not sufficiently removed and the crystal becomes yellowish, while if it is more than 10 % by weight, polycrystallization, spontaneous nucleation and an increase of inclusions take place, thus not resulting in good crystals.

The solvent metal 2 shown in Figure 1 is a metal consisting of at least one of Fe, Co, Ni, Mn and Cr and in order to prevent the seed crystal from dissolution, 0.1 to 6.0 weight % of carbon is previously added. When using a solvent having a carbon content of less than 0.1 weight % or containing no carbon, a seed isolation layer for preventing the diamond seed from dissolution such as Pt is disposed on the seed crystal, but the arrangement of the seed isolation layer causes polycrystallization or inclusion. This is not preferred. If the carbon content exceeds 6 weight %, spontaneous nucleation tends to occur and crystal growth takes place at sites other than the seed crystal, whereby crystals interfere with each other and good quality crystals cannot be obtained. Any of the known materials in the art can be used as the seed crystal and carbon source. The synthesis conditions by the temperature gradient method can suitably be chosen. Specific examples are given in the following Examples.

According to the process for the synthesis of diamond in the first and second inventions, at least one metal selected from Ti, Zr, Hf, V, Nb or Ta is added as a nitrogen getter to a solvent metal and a material capable of decomposing at least one of the carbides of Ti, Zr, Hf, V, Nb or Ta, e.g. a metal selected from Cu, Ag, Au, Zn, Cd, etc., is added to a solvent metal, or an alloy or intermetallic compound of the X-Y type where X is Ti, Zr, Hf, V, Nb or Ta and Y is Cu, Ag, Au, Zn or Cd is added to a solvent metal. Thus, the removal efficiency of nitrogen is increased and impurities of the crystal with carbides such as TiC and ZrC or inclusions due to taking in the solvent are decreased to a greater extent. Consequently, good quality diamond crystals of type IIa, substantially free from nitrogen impurities and inclusions, can be obtained at a considerably larger growth rate than in the prior art.

The reasons therefor will specifically be explained.

When using only Ti as a nitrogen getter as described above, even in a very small amount a colorless and transparent crystal can be obtained because of its high reactivity with nitrogen, but TiC in a large amount is formed in a solvent and even if the growth rate of the crystal is lowered, the inclusion of TiC, etc. is increased and a good quality crystal is hardly obtained.

However, the inclusion can be suppressed to some extent by adding Ti as a nitrogen getter and simultaneously adding Cu, thereby forming no carbide and further functioning to dissolve and decompose any TiC formed. Furthermore, the addition of an alloy or intermetallic compound, e.g. CuTi is so effective that a good crystal can readily be obtained. The removal efficiency of nitrogen is substantially similar to that for Ti, reaching such an extent that nitrogen is substantially removed even by the addition of a very small amount, e.g. about 1 weight %. As described above, it is possible to synthesize a good quality, inclusion free and colorless and transparent diamond crystal of type IIa at a considerably higher growth rate by the joint use of the nitrogen getter and carbide-decomposing material, than when using the nitrogen getters of the prior art, such as Al or Ti. Specifically, when 1 weight % of CuTi which is an intermetallic compound of Cu and Ti is added to the solvent metal, a colorless and transparent diamond crystal of the IIa type can be obtained even at a growth rate of 2.5 mg/hr.

Figure 2 is a schematic view of the structure of a sample chamber for the synthesis of diamond crystals as another embodiment of the present invention, in which at least one element selected from Ti, Zr, Hf, V, Nb or Ta as a nitrogen getter is added to a solvent metal 2 and a metal plate 3 is arranged between the solvent metal 2 and seed crystal 4. The metal plate 3 consists of Al, Ga, In, Tl, Sn or Pb in the third invention, Cu, Ag, Au, Zn or Cd in the fourth invention and Fe, Co, Ni or Mn in the fifth invention. In the last case, the metal plate 3 can be composed of an alloy such as Fe-Co or Fe-Ni. Referring to Figure 2, 1 designates a carbon source, 5 designates an insulator, 6 designates a graphite heater and 7 designates a pressure medium.

In the third invention, the thickness of the metal plate 3 is preferably from 0.01 to 0.3 mm, since if it is less than 0.01 mm, the effect thereof is not sufficient, while if it is more than 0.3 mm, inclusions tend to be taken into the diamond crystal because the solubility of carbon in the solvent is lowered by the influence of the elements such as Al, Ga, In, Tl, Sn or Pb. In the fourth invention, the thickness of the metal plate 3 is preferably from 0.01 to 1 mm, since if it is less than 0.01 mm, the effect thereof is not sufficient, while if it is more than 1 mm, the metals such as Cu, Ag, Au, Zn and Cd have a bad influence upon the growth of diamond crystals and the crystals becomes polycrystalline or have sinkholes on the surface thereof. In the fifth invention, the thickness of the metal plate 3 is preferably from 0.01 to 0.5 mm, since if if is less than 0.01 mm, the effect thereof is not sufficient, while if it is more than 0.5 mm, the seed crystal tends to dissolve.

The amount of Ti, Zr, Hf, V, Nb or Ta to be added as a nitrogen getter to the solvent 2 is preferably from 0.2 to 10 % by weight based on the solvent, since if it is less than 0.2% by weight, nitrogen is not sufficiently removed and the crystal becomes yellowish, while if it is more than 10 % by weight, polycrystallization or spontaneous nucleation often takes place and no good crystals are obtained.

In Figure 2, the solvent metal 2 is a metal consisting of at least one member selected from Fe, Co, Ni, Mn or Cr and in order to prevent the seed crystal from dissolution, 0.1 to 6.0 weight % of carbon is previously added. When using a solvent having a carbon content of less than 0.1 weight % or containing no carbon, it is required to dispose a seed isolation layer such as Pt on the seed crystal for preventing the diamond seed from dissolution, but the arrangement of the seed crystal dissolution preventing agent causes polycrystallization or inclusion. This is not preferred. If the carbon content exceeds 6 weight %, spontaneous nucleation tends to occur and crystal growth takes place at other sites than the seed crystal, whereby crystals interfere with each other and no good quality crystals can be obtained.

In the present third to fifth invention, an element having a high reactivity with nitrogen such as Ti, Zr, Hf, V, Nb or Ta is used as a nitrogen getter, so that a substantially nitrogen-free colorless and transparent diamond crystal of type IIa can be obtained by the addition of a small amount thereof. Moreover, since the synthesis of diamond is started under such a state that a metal or alloy plate consisting of Al, Ga, In, Tl, Sn or Pb (third invention), Cu, Ag, Au, Zn or Cd (fourth invention), or Fe, Co, Ni or Mn (fifth invention) is previously arranged between a solvent and seed crystal so as to prevent formation of carbides on the seed surface and to diffuse the carbides formed in thevicinity of the seed crystal during synthesis upwards in the solvent, inclusions in the diamond crystal can largely be reduced and consequently, a good quality diamond crystal of IIa type can be obtained even at a considerably higher growth rate than in the prior art.

In these inventions, as the seed crystal and carbon source, there can also be used any of the materials known in the art. The synthesis conditions by the temperature gradient method can suitably be chosen.

### [EXAMPLES]

The following Examples are given in order to illustrate the present invention in detail without limiting the same.

### Example 1

As a raw material of a solvent, high purity Fe powder with a grain diameter of 50 to 100 µm, Co powder and graphite powder were used and mixed in a proportion of Fe : Co : C = 60 : 40 : 4.5 by weight. In addition, 1.5 weight % of Ti powder with an average grain diameter of 50 µm and 1.5 weight % of Cu powder with an average grain diameter of 50 µm, based on the quantity of the solvent metal (exclusive of the graphite), were added and adequately mixed. The mixed powder was molded, degassed and baked to obtain a solvent with a diameter of 20 mm and a thickness of 10 mm. In the structure of a sample chamber shown in Fig. 1, as a carbon source 1, there was used diamond powder and as a seed crystal 3, there were used three diamond crystals of about 500 µm in diameter. The assembly was set within a heater 5 in such a manner that a temperature gradient of about 30^{o}C was provided between the carbon source 1 and seed crystals 3 and maintained at a pressure of 5.5 GPa and a temperature of 1300^{o}C for 70 hours in an ultra-high pressure apparatus, thereby synthesizing diamonds.

Consequently, three colorless and transparent, substantially inclusion-free, high quality IIa type diamond crystals of 0.7 to 0.9 carat were obtained all of which had a nitrogen concentration of at most 0.1 ppm, measured by ESR, and an inclusion concentration of at most 0.5 weight %, measured by a magnetic balance.

### Examples 2-8

Synthesis of diamond was carried out in an analogous manner to Example 1 except changing the quantities of Ti and Cu, by weight %, into (Ti, Cu) = (0.5, 0.5), (1, 1), (1, 2), (1, 3), (1, 5), (2, 2) and (2, 3), thus obtaining good quality type IIa diamond crystals each having about 0.8 carat. These crystals had a nitrogen concentration of at most 0.2 ppm and an inclusion content of at most 0.7 weight %.

### Examples 9

Synthesis of diamond was carried out in an analogous manner to Example 1 except using Zr instead of Ti, thus obtaining good quality type IIa diamond crystals substantially similar to Example 1.

### Examples 10

Synthesis of diamond was carried out in an analogous manner to Example 1 except using Ag instead of Cu, thus obtaining good quality type IIa diamond crystals substantially similar to Example 1.

### Example 11

As a raw material of a solvent, high purity Fe powder with a grain diameter of 50 to 100 µm, Co powder and graphite powder were used and mixed in a proportion of Fe : Co : C = 60 : 40 : 4.5 by weight. In addition, 3 weight % of 50Ti - 50Cu alloy powder (by weight) having an average grain diameter of 50 µm, as an additives, was added based on the quanity of the solvent metal (exclusive of the graphite), and adequately mixed. The mixed powder was molded, degassed and baked to obtain a solvent with a diameter of 20 mm and a thickness of 10 mm. In the structure of a sample chamber shown in Fig. 1, as a carbon source 1, there was used diamond powder and as a seed crystal 3, there were used three diamond crystals of about 500 µm in diameter. The assembly was set within a heater 5 in such a manner that a temperature gradient of about 30°C wasprovided between the carbon source 1 and seed crystals 3 and maintained at a pressure of 5.5 GPa and a temperature of 1300°C for 70 hours in an ultra-high pressure apparatus, thereby synthesizing diamond.

Consequently, three colorless and transparent, substantially inclusion-free, high quality type IIa diamond crystals of 0.7 to 0.9 carat were obtained all of which had a nitrogen concentration of at most 0.1 ppm, measured by ESR, and an inclusion concentration of at most 0.3 weight %, measured by a magnetic balance.

### Examples 12-16

Synthesis of diamond was carried out in an analogous manner to Example 11 except changing the amount of 50Ti - 50Cu, by weight %, into 0.5, 1.0, 2.0, 5.0, 8.0 weight %, thus obtaining good quality type IIa diamond crystals each having about 0.8 carat. These crystals had a nitrogen concentration of at most 0.2 ppm and an inclusion content of at most 0.3 weight %.

### Examples 17

Synthesis of diamond was carried out in an analogous manner to Example 11 except adding 2 weight % of 70 Ti - 30 Cu (weight ratio). Consequently, there was obtained type IIa diamond crystals substantially similar to Example 11.

### Examples 18

Synthesis of diamond was carried out in an analogous manner to Example 11 except adding 4 weight % of 25Ti - 75 Cu alloy powder (weight ratio), as an additives. Consequently, there was obtained type IIa diamond crystals substantially similar to Example 11.

### Examples 19

Synthesis of diamond was carried out in an analogous manner to Example 11 except adding 8 weight % of 10Ti - 90 Cu alloy powder (weight ratio), as an additives. Consequently, there was obtained type IIa diamond crystals substantially similar to Example 11.

### Examples 20

Synthesis of diamond was carried out in an analogous manner to Example 11 except adding 3 weight % of 70Ti - 30 Ag alloy powder (weight ratio), as an additives. Consequently, there was obtained type IIa diamond crystals substantially similar to Example 11.

### Examples 21

Synthesis of diamond was carried out in an analogous manner to Example 11 except adding 2 weight % of 50Ti - 50 Ag alloy powder (weight ratio), as an additives. Consequently, there was obtained type IIa diamond crystals substantially similar to Example 11.

### Examples 22-26

Synthesis of diamond was carried out in an analogous manner to Example 11 except using an intermetallic compound in a proportion of 0.5, 1.0, 2.0, 5.0, 8.0 weight %, thus obtaining good quality type IIa diamond crystals each having about 0.8 carat. These crystals had a nitrogen concentration of at most 0.2 ppm and an inclusion content of at most 0.3 weight %.

### Examples 27

Synthesis of diamond was carried out in an analogous manner to Example 22 except adding 1 weight % of CuTi₂ intermetallic powder, as an additives. Consequently, there was obtained type IIa diamond crystals substantially similar to Example 22.

### Examples 28

Synthesis of diamond was carried out in an analogous manner to Example 22 except adding 4 weight % of CuZr intermetallic powder, as an additives. Consequently, there was obtained type IIa diamond crystals substantially similar to Example 22.

### Examples 29

Synthesis of diamond was carried out in an analogous manner to Example 22 except adding 2 weight % of CuZr₂ intermetallic powder, as an additives. Consequently, there was obtained type IIa diamond crystals substantially similar to Example 22.

### Example 30

Synthesis of diamond was carried out in an analogous manner to Example 11 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 4.2 by weight. Consequently, there was obtained a good quality type IIa diamond crystals substantially similar to Example 11.

### Example 31

Synthesis of diamond was carried out in an analogous manner to Example 11 except using, as a raw material of a solvent, high purity Fe powder with a grain diameter of 50 to 100 µm, Ni powder, Mn powder and graphite powder and mixing them in a proportion of Fe : Ni : Mn : C = 60 : 30 : 10 : 4 by weight. Consequently, there was obtained a good quality type IIa diamond crystals substantially similar to Example 11.

### Example 32

Synthesis of diamond was carried out in an analogous manner to Example 11 except using, as a raw material of a solvent, high purity Fe powder with a grain diameter of 50 to 100 µm, Ni powder and graphite powder and mixing them in a proportion of Fe : Ni : C = 70 : 30 : 3.5. Consequently, there was obtained a good quality type IIa diamond crystals substantially similar to Example 11.

### Example 33

Synthesis of diamond was carried out in an analogous manner to Example 11 except using, as a raw material of a solvent, high purity Co powder with a grain diameter of 50 to 100 µm and graphite powder and mixing them in a proportion of Co : C = 100 : 4.7 by weight. Consequently, there was obtained good quality type IIa diamond crystals substantially similar to Example 11.

### Example 34

Synthesis of diamond was carried out in an analogous manner to Example 11 except using, as a raw material of a solvent, high purity Ni powder with a grain diameter of 50 to 100 µm and graphite powder and mixing them in a proportion of Ni : C = 100 : 4.2 by weight. Consequently, there was obtained good quality type IIa diamond crystals substantially similar to Example 11.

### Comparative Example 1

Synthesis of diamond was carried out in an analogous manner to Example 1 except not adding Cu but adding only Ti (1.5 weight %). A crystal with a less nitrogen content, i.e. 0.2 ppm was obtained, but because of a less quntity of growth, i.e. 0.3 carat per one crystal and a large quantity of TiC found in the crystal, inclusions were present in a large quantity, i.e. about 1.3 weight % and a good quality crystal could not be obtained.

### Comparative Example 2

Synthesis of diamond was carried out in an analogous manner to Example 11 except changing the amount of the 50 Ti - 50 Cu alloy powder in 15 weight %. A crystal grown from the seed crystal was rendered polycrystalline and a good quality crystal could not be obtained.

### Comparative Example 3

Synthesis of diamond was carried out in an analogous manner to Example 1 except changing the amount of Ti to be added as a nitrogen getter in 15 weight %. A crystal grown from the seed crystal was rendered polycrystalline and a good quality crystal could not be obtained. Spontaneous nucleation also took place.

### Comparative Example 4

Synthesis of diamond was carried out in an analogous manner to Example 11 except using, as a raw material of a solvent, high purity Fe powder with a grain diameter of 50 to 100 µm, Ni powder and Co powder and mixing them in a proportion of Fe : Ni : Co = 60 : 30 : 10 by weight, and not adding graphite. Consequently, the seed crystals were dissolved in the solvent and disappeared and there was found no growth of diamond.

### Comparative Example 5

Synthesis of diamond was carried out in an analogous manner to Example 11 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 7 by weight. Consequently, a number of diamond crystals were formed by spontaneous nucleation from other sites than the seed crystals and the crystals interfere with each other, thus resulting in no good diamond crystals.

### Example 35

As a raw material of a solvent, high purity Fe powder with a grain diameter of 50 to 100 µm, Co powder and graphite powder were used and mixed in a proportion of Fe : Co : C = 60 : 40 : 4.5 by weight. In addition, 1.5 weight % of Ti powder with an average grain diameter of 50 µm was added as a nitrogen getter and adequately mixed. The mixed powder was molded, degassed and baked to obtain a solvent with a diameter of 20 mm and a thickness of 10 mm. In the structure of a sample chamber shown in Fig. 1, as a carbon source 1, there was used diamond powder and as a seed crystal 4, there were used three diamond crystals of about 500 µm in diameter. As a metallic plate 3 to be arranged between the seed crystal 4 and solvent 2, there was used an Al plate with a thickness of 0.05 mm. The assembly was set within a heater 6 in such a manner that a temperature gradient of about 30 °C was provided between the carbon source 1 and seed crystals 4 and maintained at a pressure of 5.5 GPa and a temperature of 1300°C for 70 hours in an ultra-high pressure apparatus, thereby synthesizing diamond.

Consequently, three colorless and transparent, substantially inclusion-free, high quality type IIa diamond crystals of 0.7 to 0.9 carat were obtained all of which had a nitrogen concentration of at most 0.1 ppm, measured by ESR, and an inclusion concentration of at most 0.3 weight %, measured by a magnetic balance.

### Examples 36

Synthesis of diamond was carried out in an analogous manner to Example 35 except using an Al plate with a thickness of 0.2 mm as the metallic plate 3 to be arranged between the seed crystal 4 and solvent 2, thus obtaining good quality type IIa diamond crystals substantially similar to Example 35.

### Examples 37

Synthesis of diamond was carried out in an analogous manner to Example 35 except using an Sn plate with a thickness of 0.05 mm as the metallic plate 3 to be arranged between the seed crystal 4 and solvent 2, thus obtaining good quality type IIa diamond crystals substantially similar to Example 35.

### Examples 38

Synthesis of diamond was carried out in an analogous manner to Example 35 except using an Sn plate with a thickness of 0.2 mm as the metallic plate 3 to be arranged between the seed crystal 4 and solvent 2, thus obtaining good quality type IIa diamond crystals substantially similar to Example 35.

### Examples 39

Synthesis of diamond was carried out in an analogous manner to Example 35 except using an In plate with a thickness of 0.1 mm as the metallic plate 3 to be arranged between the seed crystal 4 and solvent 2, thus obtaining good quality type IIa diamond crystals substantially similar to Example 35.

### Examples 40

Synthesis of diamond was carried out in an analogous manner to Example 35 except using a Pb plate with a thickness of 0.1 mm as the metallic plate 3 to be arranged between the seed crystal 4 and solvent 2, thus obtaining good quality type IIa diamond crystals substantially similar to Example 35.

### Examples 41

Synthesis of diamond was carried out in an analogous manner to Example 35 except adding 3 weight % of Zr powder with a grain diameter of at most 44 µm (mean 10 µm) to the solvent as a nitrogen getter to be added to solvent 2, thus obtaining good quality type IIa diamond crystals substantially similar to Example 35.

### Examples 42

Synthesis of diamond was carried out in an analogous manner to Example 35 except adding 3 weight % of AlTi powder with a grain diameter of at most 44 µm (mean 10 µm ) to the solvent as a nitrogen getter to be added to solvent 2, thus obtaining good quality type IIa diamond crystals substantially similar to Example 35.

### Examples 43

Synthesis of diamond was carried out in an analogous manner to Example 42 except using CuTi, SnTi or Si₅Ti₆ alloy powder instead of the AlTi alloy powder as a nitrogen getter to be added to solvent 2, thus obtaining good quality type IIa diamond crystals substantially similar to Example 35.

### Examples 44

Synthesis of diamond was carried out in an analogous manner to Example 35 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 4.2 by weight, thus obtaining good quality type IIa diamond crystals substantially similar to Example 35.

### Examples 45

Synthesis of diamond was carried out in an analogous manner to Example 35 except using, as a raw material of a solvent, high purity Fe powder with a grain diameter of 50 to 100 µm, Ni powder, Mn powder and graphite powder and mixing them in a proportion of Fe : Ni : Mn : C = 60 : 30 : 10 : 4 by weight, thus obtaining good quality type IIa diamond crystals substantially similar to Example 35.

### Examples 46

Synthesis of diamond was carried out in an analogous manner to Example 35 except using, as a raw material of a solvent, high purity Fe powder with a grain diameter of 50 to 100 µm, Ni powder and graphite powder and mixing them in a proportion of Fe : Ni : C = 70 : 30 : 3.5 by weight, thus obtaining good quality type IIa diamond crystals substantially similar to Example 35.

### Examples 47

Synthesis of diamond was carried out in an analogous manner to Example 35 except using, as a raw material of a solvent, high purity Co powder with a grain diameter of 50 to 100 µm and graphite powder and mixing them in a proportion of Co : C = 100 : 4.7 by weight, thus obtaining good quality type IIa diamond crystals substantially similar to Example 35.

### Examples 48

Synthesis of diamond was carried out in an analogous manner to Example 35 except using, as a raw material of a solvent, high purity Ni powder with a grain diameter of 50 to 100 µm and graphite powder and mixing them in a proportion of Ni : C = 100 : 4.2 by weight, thus obtaining good quality type IIa diamond crystals substantially similar to Example 35.

### Comparative Example 6

Synthesis of diamond was carried out in an analogous manner to Example 35 except not arranging the metallic plate between the solvent and seed crystal. A crystal with a less nitrogen content (about 0.1 ppm) was obtained, but because of a large amount of inclusions, i.e. about 1.5 weight %, a good quality crystal could not be obtained.

### Comparative Example 7

Synthesis of diamond was carried out in an analogous manner to Example 35 except changing the thickness of the Al plate arranged between the solvent and seed crystal in 0.5 mm. A crystal with a less nitrogen content (about 0.1 ppm) was obtained, but there was found a large amount of inclusions, i.e. about 1.0 weight %.

### Comparative Example 8

Synthesis of diamond was carried out in an analogous manner to Example 35 except changing the quantity of Ti to be added to the solvent as a nitrogen getter in 15 weight %. A crystal grown from the seed crystal was rendered polycrystalline.

### Comparative Example 9

Synthesis of diamond was carried out in an analogous manner to Example 35 except using, as a raw material of a solvent, high purity Fe powder with a grain diameter of 50 to 100 µm, Ni powder and Co powder and mixing them in a proportion of Fe : Ni : Co = 60 : 30 : 10 by weight, and not adding graphite. Consequently, the seed crystal was dissolved in the solvent and disappeared and growth of diamond was not sufficient.

### Comparative Example 10

Synthesis of diamond was carried out in an analogous manner to Example 35 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 7 by weight. Consequently, a number of diamond crystals were formed by spontaneous nucleation from other sites than the seed crystals, the crystals interfere with each other and a good quality diamond crystal could hardly be obtained.

### Example 49

Synthesis of diamond was carried out in an analogous manner to Example 35 except using a Cu plate with a thickness of 0.2 mm instead of the Al plate with a thickness of 0.05 mm. Consequently, there was obtained a good quality type IIa diamond crystal substantially similar to Example 35

### Examples 50

Synthesis of diamond was carried out in an analogous manner to Example 49 except using a Cu plate with a thickness of 0.5 mm as the metallic plate 3 to be arranged between the seed crystal 4 and solvent 2, thus obtaining good quality type IIa diamond crystals substantially similar to Example 49.

### Examples 51

Synthesis of diamond was carried out in an analogous manner to Example 49 except using an Ag plate with a thickness of 0.2 mm as the metallic plate 3 to be arranged between the seed crystal 4 and solvent 2, thus obtaining good quality type IIa diamond crystals substantially similar to Example 49.

### Examples 52

Synthesis of diamond was carried out in an analogous manner to Example 49 except using an Au plate with a thickness of 0.3 mm as the metallic plate 3 to be arranged between the seed crystal 4 and solvent 2, thus obtaining good quality type IIa diamond crystals substantially similar to Example 49.

### Examples 53

Synthesis of diamond was carried out in an analogous manner to Example 49 except using an Au plate with a thickness of 0.05 mm as the metallic plate 3 to be arranged between the seed crystal 4 and solvent 2, thus obtaining good quality type IIa diamond crystals substantially similar to Example 49.

### Examples 54

Synthesis of diamond was carried out in an analogous manner to Example 49 except using a Zn plate with a thickness of 0.2 mm as the metallic plate 3 to be arranged between the seed crystal 4 and solvent 2, thus obtaining good quality type IIa diamond crystals substantially similar to Example 49.

### Examples 55

Synthesis of diamond was carried out in an analogous manner to Example 49 except adding 3 weight % of Zr powder with a grain diameter of at most 44 µm (mean 10 µm) to the solvent as a nitrogen getter to be added to solvent 2, thus obtaining good quality type IIa diamond crystals substantially similar to Example 49.

### Examples 56

Synthesis of diamond was carried out in an analogous manner to Example 49 except adding 3 weight % of AlTi powder with a grain diameter of at most 44 µm (mean 10 µm ) to the solvent as a nitrogen getter to be added to solvent 2, thus obtaining good quality type IIa diamond crystals substantially similar to Example 49.

### Examples 57

Synthesis of diamond was carried out in an analogous manner to Example 56 except using CuTi, SnTi or Si₅Ti₆ alloy powder instead of the AlTi alloy powder as a nitrogen getter to be added to solvent 2, thus obtaining good quality type IIa diamond crystals substantially similar to Example 49.

### Examples 58

Synthesis of diamond was carried out in an analogous manner to Example 49 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 4.2 by weight, thus obtaining good quality type IIa diamond crystals substantially similar to Example 49.

### Examples 59

Synthesis of diamond was carried out in an analogous manner to Example 49 except using, as a raw material of a solvent, high purity Fe powder with a grain diameter of 50 to 100 µm, Ni powder, Mn powder and graphite powder and mixing them in a proportion of Fe : Ni : Mn : C = 60 : 30 : 10 : 4 by weight, thus obtaining good quality type IIa diamond crystals substantially similar to Example 49.

### Examples 60

Synthesis of diamond was carried out in an analogous manner to Example 49 except using, as a raw material of a solvent, high purity Fe powder with a grain diameter of 50 to 100 µm, Ni powder and graphite powder and mixing them in a proportion of Fe : Ni : C = 70 : 30 : 3.5 by weight, thus obtaining good quality type IIa diamond crystals substantially similar to Example 49.

### Examples 61

Synthesis of diamond was carried out in an analogous manner to Example 49 except using, as a raw material of a solvent, high purity Co powder with a grain diameter of 50 to 100 µm and graphite powder and mixing them in a proportion of Co : C = 100 : 4.7 by weight, thus obtaining good quality type IIa diamond crystals substantially similar to Example 49.

### Examples 62

Synthesis of diamond was carried out in an analogous manner to Example 49 except using, as a raw material of a solvent, high purity Ni powder with a grain diameter of 50 to 100 µm and graphite powder and mixing them in a proportion of Ni : C = 100 : 4.2 by weight, thus obtaining good quality type IIa diamond crystals substantially similar to Example 49.

### Comparative Example 11

Synthesis of diamond was carried out in an analogous manner to Example 49 except not arranging the metallic plate between the solvent and seed crystal. A crystal with a less nitrogen content (about 0.1 ppm) was obtained, but because of a large amount of inclusions, i.e. about 1.5 weight %, a good quality crystal could not be obtained.

### Comparative Example 12

Synthesis of diamond was carried out in an analogous manner to Example 49 except changing the thickness of the Cu plate arranged between the solvent and seed crystal in 2 mm. A grown diamond crystal was a skeleton-shaped crystal having sinkholes on the surface thereof.

### Comparative Example 13

Synthesis of diamond was carried out in an analogous manner to Example 49 except changing the quantity of Ti to be added to the solvent as a nitrogen getter in 15 weight %. A crystal grown from the seed crystal was rendered polycrystalline.

### Comparative Example 14

Synthesis of diamond was carried out in an analogous manner to Example 49 except using, as a raw material of a solvent, high purity Fe powder with a grain diameter of 50 to 100 µm, Ni powder and Co powder and mixing them in a proportion of Fe : Ni : Co = 60 : 30 : 10 by weight, and not adding graphite. Consequently, the seed crystal was dissolved in the solvent and disappeared and growth of diamond was not sufficient.

### Comparative Example 15

Synthesis of diamond was carried out in an analogous manner to Example 49 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 7 by weight. Consequently, a number of diamond crystals were formed by spontaneous nucleation from other sites than the seed crystals, the crystals interfere with each other and a good quality diamond crystal could hardly be obtained.

### Example 63

Synthesis of diamond was carried out in an analogous manner to Example 35 except using a Co plate with a thickness of 0.1 mm instead of the Al plate with a thickness of 0.05 mm. Consequently, there was obtained a good quality type IIa diamond crystal substantially similar to Example 35.

### Examples 64

Synthesis of diamond was carried out in an analogous manner to Example 63 except using a Ni plate with a thickness of 0.1 mm as the metallic plate 3 to be arranged between the seed crystal 4 and solvent 2, thus obtaining good quality type IIa diamond crystals substantially similar to Example 63.

### Examples 65

Synthesis of diamond was carried out in an analogous manner to Example 63 except using a 73Fe - 27Co alloy plate with a thickness of 0.1 mm as the metallic plate 3 to be arranged between the seed crystal 4 and solvent 2, thus obtaining good quality type IIa diamond crystals substantially similar to Example 63.

### Examples 66

Synthesis of diamond was carried out in an analogous manner to Example 63 except using a 50Fe - 50Ni alloy plate with a thickness of 0.1 mm as the metallic plate 3 to be arranged between the seed crystal 4 and solvent 2, thus obtaining good quality type IIa diamond crystals substantially similar to Example 63.

### Examples 67

Synthesis of diamond was carried out in an analogous manner to Example 63 except using a 95Co - 5Fe alloy plate with a thickness of 0.05 mm as the metallic plate 3 to be arranged between the seed crystal 4 and solvent 2, thus obtaining good quality type IIa diamond crystals substantially similar to Example 63.

### Examples 68

Synthesis of diamond was carried out in an analogous manner to Example 63 except using a Co plate with a thickness of 0.35 mm as the metallic plate 3 to be arranged between the seed crystal 4 and solvent 2, thus obtaining good quality type IIa diamond crystals substantially similar to Example 63.

### Examples 69

Synthesis of diamond was carried out in an analogous manner to Example 63 except adding 3 weight % of Zr powder with a grain diameter of at most 44 µm (mean 10 µm) to the solvent as a nitrogen getter to be added to solvent 2, thus obtaining good quality type IIa diamond crystals substantially similar to Example 63.

### Examples 70

Synthesis of diamond was carried out in an analogous manner to Example 63 except adding 3 weight % of AlTi powder with a grain diameter of at most 44 µm (mean 10 µm ) to the solvent as a nitrogen getter to be added to solvent 2, thus obtaining good quality type IIa diamond crystals substantially similar to Example 63.

### Examples 71

Synthesis of diamond was carried out in an analogous manner to Example 63 except using CuTi, SnTi or Si₅Ti₆ alloy powder instead of the AlTi alloy powder as a nitrogen getter to be added to solvent 2, thus obtaining good quality type IIa diamond crystals substantially similar to Example 63.

### Examples 72

Synthesis of diamond was carried out in an analogous manner to Example 63 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 4.2 by weight, thus obtaining good quality IIa type diamond crystals substantially similar to Example 63.

### Examples 73

Synthesis of diamond was carried out in an analogous manner to Example 63 except using, as a raw material of a solvent, high purity Fe powder with a grain diameter of 50 to 100 µm, Ni powder, Mn powder and graphite powder and mixing them in a proportion of Fe : Ni : Mn : C = 60 : 30 : 10 : 4 by weight, thus obtaining good quality type IIa diamond crystals substantially similar to Example 63.

### Examples 74

Synthesis of diamond was carried out in an analogous manner to Example 63 except using, as a raw material of a solvent, high purity Fe powder with a grain diameter of 50 to 100 µm, Ni powder and graphite powder and mixing them in a proportion of Fe : Ni : C = 70 : 30 : 3.5 by weight, thus obtaining good quality type IIa diamond crystals substantially similar to Example 63.

### Examples 75

Synthesis of diamond was carried out in an analogous manner to Example 63 except using, as a raw material of a solvent, high purity Co powder with a grain diameter of 50 to 100 µm and graphite powder and mixing them in a proportion of Co : C = 100 : 4.7 by weight, thus obtaining good quality IIa type diamond crystals substantially similar to Example 63.

### Examples 76

Synthesis of diamond was carried out in an analogous manner to Example 63 except using, as a raw material of a solvent, high purity Ni powder with a grain diameter of 50 to 100 µm and graphite powder and mixing them in a proportion of Ni : C = 100 : 4.2 by weight, thus obtaining good quality type IIa diamond crystals substantially similar to Example 63.

### Comparative Example 16

Synthesis of diamond was carried out in an analogous manner to Example 63 except not arranging the metallic plate between the solvent and seed crystal. A crystal with a less nitrogen content (about 0.1 ppm) was obtained, but because of a large amount of inclusions, i.e. about 1.5 weight %, a good quality crystal could not be obtained.

### Comparative Example 17

Synthesis of diamond was carried out in an analogous manner to Example 63 except changing the thickness of the Co plate arranged between the solvent and seed crystal in 1 mm. All the seed crystals were dissolved and disappeared, and no diamond was obtained.

### Comparative Example 18

Synthesis of diamond was carried out in an analogous manner to Example 63 except changing the quantity of Ti to be added to the solvent as a nitrogen getter in 15 weight %. A crystal grown from the seed crystal was rendered polycrystalline and a good quality crystal was not obtained. A number of spontaneous nucleation took place.

### Comparative Example 19

Synthesis of diamond was carried out in an analogous manner to Example 63 except using, as a raw material of a solvent, high purity Fe powder with a grain diameter of 50 to 100 µm, Ni powder and Co powder and mixing them in a proportion of Fe : Ni : Co = 60 : 30 : 10 by weight, and not adding graphite. Consequently, the seed crystal was dissolved in the solvent and disappeared and growth of diamond was not found.

### Comparative Example 20

Synthesis of diamond was carried out in an analogous manner to Example 63 except using, as a raw material of a solvent, high purity Fe powder with a grain diameter of 50 to 100 µm, Ni powder, Co powder and graphite powder and mixing them in a proportion of Fe : Ni : Co : C = 60 : 30 : 10 : 7 by weight. Consequently, a number of diamond crystals were formed by spontaneous nucleation from other sites than the seed crystals, the crystals interfere with each other and a good quality diamond crystal could hardly be obtained.

As apparent from the foregoing illustrations and examples, according to the process of the present invention, a colorless and transparent, substantially inclusion-free diamond crystal can be synthesized in economical and stable manner. The synthesized diamond by this process can be applied to ornamental articles and optical parts.

## Claims

1. A process for the synthesis of diamond single crystals by a temperature gradient method, which comprises adding at least one element selected from Ti, Zr, Hf, V, Nb or Ta as a nitrogen getter and a material capable of decomposing at least one of the carbides of Ti, Zr, Hf, V, Nb or Ta to a solvent metal.

2. A process as claimed in claim 1 wherein the material capable of decomposing at least one of the carbides of Ti, Zr, Hf, V, Nb or Ta is at least one metal selected from Cu, Ag, Au, Zn or Cd.

3. A process as claimed in claim 1 or claim 2 wherein the amount of Ti, Zr, Hf, V, Nb or Ta added as a nitrogen getter is in the range of from 0.1 to 5 weight % based on the solvent and the amount of the material capable of decomposing at least one of the carbides of Ti, Zr, Hf, V, Nb or Ta added to the solvent is in the range of from 0.1 to 20 weight % based on the solvent.

4. A process for the synthesis of diamond single crystals by a temperature gradient method, which comprises adding an alloy or intermetallic compound of the X-Y type where X is Ti, Zr, Hf, V, Nb or Ta and Y is Cu, Ag, Au, Zn or Cd to a solvent metal.

5. A process as claimed in claim 4 wherein the amount of the alloy or intermetallic compound of the X-Y type is in the range of from 0.1 to 10 weight % based on the solvent.

6. A process as claimed in any one of the preceding claims wherein the solvent metal is at least one metal selected from Fe, Co, Ni, Mn and Cr and contains 0.1 to 6.0 weight % of carbon.

7. A process for the synthesis of diamond single crystals by a temperature gradient method, which comprises adding at least one element selected from Ti, Zr, Hf, V, Nb or Ta as a nitrogen getter and starting the synthesis of diamond under such a state that a metallic plate is arranged between the solvent metal and the seed crystals.

8. A process as claimed in claim 7 wherein the metallic plate consists of at least one metal selected from Al, Ga, In, Tl, Sn or Pb.

9. A process as claimed in claim 8, wherein the metallic plate has a thickness of from 0.01 to 0.3 mm.

10. A process as claimed in claim 7 wherein the metallic plate consists of at least one metal selected from Cu, Ag, Au, Zn or Cd.

11. A process as claimed in claim 10, wherein the metallic plate has a thickness of from 0.01 to 1 mm.

12. A process as claimed in claim 7 wherein the metallic plate consists of at least one metal selected from Fe, Co, Ni or Mn.

13. A process as claimed in claim 12, wherein the metallic plate has a thickness of from 0.01 to 0.5 mm.

14. A process as claimed in claim 7 wherein the content of at least one of Ti, Zr, Hf, V, Nb or Ta as a nitrogen getter is in the range of from 0.2 to 10 weight %.

15. A process as claimed in claim 7 wherein the solvent metal is at least one of Fe, Co, Ni, Mn or Cr and contains 0.1 to 6.0 weight % of carbon.
